Europäisches Patentamt

European Patent Office

Office européen des brevets

(11) Veröffentlichungsnummer: **0 317 857 B1**

(12) # EUROPÄISCHE PATENTSCHRIFT

(45) Veröffentlichungstag der Patentschrift: **27.05.92**

(51) Int. Cl.⁵: **C01G 23/053**, C22B 34/12

(21) Anmeldenummer: **88118917.9**

(22) Anmeldetag: **14.11.88**

(54) **Verfahren zur Herstellung von Titandioxid.**

(30) Priorität: **23.11.87 CH 548/87**

(43) Veröffentlichungstag der Anmeldung:
**31.05.89 Patentblatt 89/22**

(45) Bekanntmachung des Hinweises auf die
Patenterteilung:
**27.05.92 Patentblatt 92/22**

(84) Benannte Vertragsstaaten:
**AT BE DE ES FR GB IT LU NL SE**

(56) Entgegenhaltungen:
**EP-A- 0 031 507**
**EP-A- 0 220 583**
**DE-A- 2 726 418**
**DE-A- 2 729 755**
**DE-A- 3 513 120**

(73) Patentinhaber: **Sulzer-Escher Wyss AG**
**Hardstrasse 319**
**CH-8023 Zürich(CH)**

(72) Erfinder: **Mauer, Josef**
**Talstrasse 55**
**W-5090 Leverkusen 3(DE)**

(74) Vertreter: **Paschedag, Hansjoachim**
**c/o Sulzer - Escher Wyss AG Patentabteilung**
**Postfach**
**CH-8023 Zürich(CH)**

## Beschreibung

Die Erfindung betrifft ein Verfahren zur Herstellung von Titandioxid mittels Aufschluss von Titanschlacke enthaltendem Ausgangsmaterial mit Schwefelsäure, wobei die gemahlene Titanschlacke mit über 95%iger Schwefelsäure gemischt wird und anschliessend der Mischung warme, aus bei der Titandioxid-Herstellung anfallender Dünnschwefelsäure konzentrierte und recyklierte Säure zugegeben wird, und aus dem Aufschlusskuchen eine zur Hydrolyse von Titanylsulfat geeignete Lösung hergestellt wird, wobei die recyklierte Säure aus der beim Abtrennen des Hydrolysats anfallenden Dünnschwefelsäure durch Konzentration auf einen Schwefelsäuregehalt von 76 - 87% unter Abtrennung von Metallsalzen gewonnen wird.

Ein Verfahren zur Herstellung von Titandioxid ist beispielsweise aus "Ullmanns Encyklopädie der technischen Chemie", 4. Auflage (1979), Band 18, S. 570 - 580, bekannt. Als Rohstoffe werden dabei Ilmenit mit hohem Eisengehalt, sowie mit besonderem Vorteil Titanschlacke, die aus Ilmenit durch Eisenabtrennung gewonnen wird, verwendet.

Ein Aufschlussverfahren für Titanschlacke als Ausgangsmaterial ist z.B. in EP-A-197 507 beschrieben. Dabei wird angestrebt, eine umweltbelastende Deponie der bei der Titandioxid-Herstellung nach dem Sulfatverfahren anfallenden grossen Mengen von Abfallschwefelsäure niedriger Konzentration und von Metallsalzen, oder deren Verklappung in das offene Meer zu vermeiden, indem die im Prozess anfallende Abfallschwefelsäure wiederaufbereitet und in möglichst grossem Umfange recykliert und im Prozess wiederverwendet wird.

Die für den Start der Aufschlussreaktion von Titanschlacke erforderliche hohe Schwefelsäurekonzentration, im Falle des Aufschlusses von Titanschlacke ca. 90%, bei einer Temperatur von ca. 120° C, macht es erforderlich, die mit einer Konzentration von ca 23% anfallende Dünnschwefelsäure auf einen möglichst hohen Schwefelsäuregehalt zu konzentrieren, wobei gegebenenfalls störende Metallverbindungen abgetrennt werden müssen. Entsprechende Verfahren sind beispielsweise in den "Materialien 2/76 - Rückstände aus der Titandioxid-Produktion" des Umweltbundesamtes, Berlin, 1982, zusammengestellt, oder aus DE-A-2 807 380, DE-A-2 807 394 oder DE-A-2 807 360 bekannt.

Dabei muss die Endkonzentration um so höher sein, je mehr Abfallschwefelsäure recykliert werden soll, wobei die Startkonzentration durch Zugabe der nötigen Menge von noch höher konzentrierter, d.h. über 95%iger Frischsäure erreicht werden muss. Eine besonders hohe Endkonzentration lässt sich jedoch nur mit erhöhtem Energieaufwand erreichen, was ebenfalls unerwünscht ist und das Verfahren unwirtschaftlich machen kann, so dass die bekannten Verfahren noch nicht mit optimalem Recyklierungsgrad von Schwefelsäure und gleichzeitig ökonomisch und energiesparend arbeiten, d.h. entweder kann nur ein Teil der anfallenden Abfallschwefelsäure recykliert werden, oder die Abfallschwefelsäure muss in unwirtschaftlicher Weise aufkonzentriert werden.

Beispielsweise wird bei dem aus EP-A-31 507 Verfahren eine Mischung von Titanschlacke und Ilmenit mit 86-96%iger Schwefelsäure aufgeschlossen. Um einen grossen Teil der anfallenden Dünnschwefelsäure wiederverwenden zu können, muss diese energieintensiv auf sehr hohe Konzentrationen aufkonzentriert werden, wobei vorzugsweise noch prozessfremdes Oleum zugegeben werden muss.

In EP-A-220 583 ist ein Verfahren zur Aufkonzentration der bei der Titandioxidherstellung anfallenden Dünnschwefelsäure auf eine $H_2SO_4$-Konzentration von 70-85% beschrieben, wobei diese aufkonzentrierte Schwefelsäure zur Wiederverwendung beim Titanrohstoffaufschluss mit prozessfremder über 95%iger Schwefelsäure, vorzugsweise Oleum vermischt wird. Auch hier ist der Recyklierungsgrad der Dünnschwefelsäure und der Energieverbrauch nicht optimal.

Die Erfindung setzt sich die Aufgabe, die vorstehend erwähnten Nachteile des Standes der Technik zu vermeiden und insbesondere beim Verfahren zur Herstellung von Titandioxid nach dem Sulfatverfahren einen grösseren Teil der anfallenden Abfallprodukte im Prozess wiederzuverwenden und insbesondere den Recyklierungsgrad der Schwefelsäure zu erhöhen, und gleichzeitig das Verfahren ökonomischer und energiesparender zu gestalten.

Erfindungsgemäss wird diese Aufgabe durch die Maßnahmen des unabhängigen Anspruchs 1 gelöst. Bevorzugte Ausführungsformen sind Gegenstand des Abhängigen Ansprüche 2-7.

Weiterhin ist es vorteilhaft, das Mengenverhältnis von Titanschlacke und Ilmenit, sowie die Anteile von recyklierter und von hochkonzentrierter Schwefelsäure beim Titanschlacken- und beim Ilmenit-Aufschluss so zu wählen, dass die Startbedingungen für die beiden Aufschlüsse, gegebenenfalls durch Einleitung von Heissdampf, erreicht werden.

Die Erfindung geht dabei von der Erkenntnis aus, dass die Startbedingungen für den Aufschluss von Titanschlacke und Ilmenit unterschiedlich sind, nämlich ca. 90% und 120° C für Titanschlacke, und ca. 85% und ca. 90° C im Falle von Ilmenit. Damit wird es möglich, die in grossen Mengen beim Titanschlacken-Aufschluss anfallende Abfallschwefelsäure energiesparend nur bis 85% aufzukonzentrieren und den überwiegenden Teil davon zum Ilmenit-Aufschluss einzusetzen. Der verbleibende Rest kann dann leicht durch Zusatz von 98.5%iger Säure, welche zum Teil selbst wieder aus dem Prozess stammt, auf die Startkonzentration von 90% gebracht werden, d.h. ein grösserer Teil der Abfallsäure kann ohne energieintensive Hochkonzentrierung wiederverwendet werden.

Beispiel:

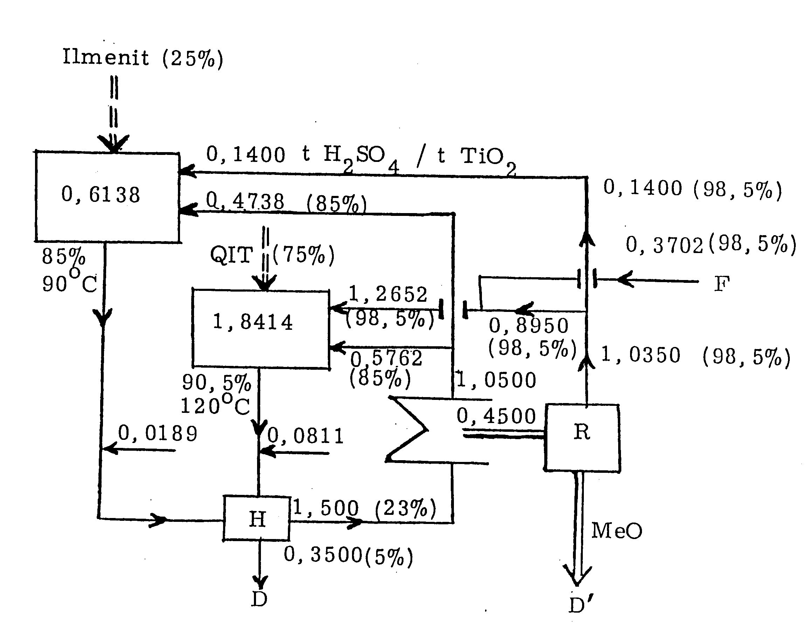

Die Erfindung wird an Hand des in der beiliegenden Figur Zirkulationsschemas der Schwefelsäure bei einem erfindungsgemässen Herstellungsverfahren von Titandioxid nach dem Sulfatverfahren mit zwei verschiedenen Ausgangsmaterialien schematisch dargestellt. Die angegebenen Zahlenwerte bezeichnen darin die jeweiligen Mengen 100%iger Schwefelsäure in der Säure der angegebenen Schwefelsäurekonzentration in Tonnen, bezogen auf eine Tonne hergestelltes Titandioxid. Die Angaben sind durchwegs als Gewichts-% zu verstehen.

In dem in der Figur wiedergegebenen Schema wird kanadische QIT-Titanschlacke (der Quebec Iron and Titanium Corp.) parallel zu australischem Ilmenit-Erz mit Anteilen der gleichen recyklierten Säuren aufgeschlossen. Dabei enthält Titanschlacke nur geringe Mengen von Eisen, jedoch grössere Anteile anderer Metalle, beispielsweise Aluminium und Magnesium, während Ilmenit vorzugsweise Eisen als Fremdstoff aufweist. Ueberraschenderweise lässt sich mit dem getrennten parallelen Aufschluss beider Rohstoffe und anschliessendem Mischen der Mutterlaugen, d.h. der Lösungen der Aufschlusskuchen, und bei bestimmtem Verhältnis der Rohstoffe eine noch bessere Wiederverwendung und Recyklierung der Abfallprodukte und damit eine noch ökonomischere Titandioxid-Herstellung erreichen.

Im dargestellten Beispiel werden 25% australischer Ilmenit mit einem $TiO_2$-Gehalt von 54,5%, sowie 75% QIT-Schlacke mit 78% $TiO_2$-Gehalt parallel zueinander aufgeschlossen. Bei einer Gesamtausbeute von 87,5% werden 1,55 t 100%ige $H_2SO_4$ pro Tonne Erz benötigt. Je t hergestelltes $TiO_2$ werden 2,4552 t $H_2SO_4$ benötigt. Davon werden 0,6138 t zum Ilmenit-Aufschluss verwendet, und 1,8414 t zum Aufschluss der QIT-Schlacke. Sämtliche Mengenangaben beziehen sich auf den Gehalt der Säure an 100%iger $H_2SO_4$ und verstehen sich pro Tonne erzeugtes $TiO_2$.

Der Ilmenit-Aufschluss erfolgt durch Zugabe von 0,14 t nahezu azeotroper 98,5%iger recyklierter, aus der Röstung anfallender Metallsulfate gewonnener $H_2SO_4$ zum gemahlenen Ilmenit-Erz und anschliessender Zugabe von 0,4738 t recyklierter, auf 85% konzentrierter, vorzugsweise unter 80°C warmer Dünnsäure. Damit ergibt sich eine Konzentration von 87,7% bei ca. 75°C. Der Start der Aufschlussreaktion erfolgt durch Zugabe von 0,0226t Dampf von 150°C. Die Startbedingungen für den Ilmenit-Aufschluss, eine Säurekonzentration von 85% bei einer Temperatur von mindestens 90°C, werden damit erreicht. Zur Bleichung werden noch 0,0189 t $H_2SO_4$ benötigt.

Der QIT-Aufschluss erfolgt hingegen durch Zugabe von 0,8950 t $H_2SO_4$ mit 98,5%, welche aus der Röstung R der Metallsulfate gewonnen wurde, zur gemahlenen Titanschlacke in einem gekühlten Mischbehälter unter Beifügung von 0,3702 t kalter Frischsäure F von 98,5%. Anschliessend wird die Mischung in einen Reaktionstank überführt und 0,5762 t 85%ige vorzugsweise unter 80°C warme recyklierte Schwefelsäure zugegeben, so dass sich eine $H_2SO_4$-Konzentration 93,8% bei ca. 75°C einstellt. Durch Zugabe von 0,0723 t Dampf mit 150°C werden die Startbedingungen von 90% und 120°C erreicht. Die Bleichung erfolgt durch Zugabe von 0,0811 t $H_2SO_4$.

Die nach dem Aufschluss entstehenden Lösungen aus den Aufschlusskuchen werden gemischt und in bekannter Weise zu Titandioxid weiterverarbeitet (H), d.h. die ausgetragenen Aufschlusskuchen werden in bekannter Weise in Wasser oder verdünnter Säure bei niedriger Temperatur aufgelöst, wobei das Titan als Titanoxidhydrat in Lösung geht und die im Rückstand verbleibenden Metallsulfate abgetrennt werden können. Das Titanoxidhydrat in der Mischung der beiden Lösungen wird durch Hydrolyse ausgefällt und abgetrennt. Das ausgewaschene Hydrolysat wird filtriert und entwässert. Dabei fallen 0,3500 t ca. 5%ige $H_2SO_4$ als Dünnfiltrat an, welche entsorgt werden müssen (D), da eine Aufbereitung sehr unwirtschaftlich wäre, während 1,5000 t als ca. 23%ige Dünnsäure vorliegen. Diese wird unter Abtrennung von 0,7000 t Metallsulfaten mit einer Restfeuchte von 0,4500 t $H_2SO_4$-Gehalt auf eine Menge von 1,0500 t $H_2SO_4$ von 85% Konzentration aufkonzentriert. 0,4738 t davon werden, wie angeführt, zum Ilmenit-Aufschluss und 0,5762 t zum QIT-Aufschluss verwendet. Bei der Röstung R der Metallsulfate und anschliessenden Lösung der Schwefeloxide fallen 1,0350 t $H_2SO_4$ mit 98,5% an, wovon, wie angeführt, 0,1400 t zum Ilmenit-Aufschluss und 0,8950 t zum QIT-Aufschluss wiederverwendet werden. Lediglich 0,3702 t Frischsäure, also nur 15% der gesamten im Prozess benötigten Schwefelsäuremenge, müssen als Ersatz für Verluste extern zugegeben werden.

Bei einem solchen kombinierten Aufschluss wird ausgenutzt, dass als Startbedingung für den Ilmenit-Aufschluss nur eine Schwefelsäure-Konzentration von 85% bei ca. 90°C erforderlich ist, im Vergleich zu 90% und 120°C für Titanschlacke. Damit kann mit Vorteil ein grosser Anteil der in grösseren Mengen anfallenden 85%igen aufkonzentrierten Recyklierersäure für den Aufschluss von Ilmenit verwendet werden, wobei nur ein geringerer Teil 98,5%iger hochkonzentrierter Schwefelsäure erforderlich ist. Der überwiegende Teil der hochkonzentrierten 98,5%igen Säure steht damit für den Schlackenaufschluss zur Verfügung, wozu nur noch eine geringere Menge 85%ige Recycliersäure beigefügt werden muss. Mit einem kombinierten parallelen Aufschluss von Ilmenit und Titanschlacke lässt sich also ein noch grösserer Recyklierungsgrad energiesparend und ökonomischer erreichen, und zwar ohne die Notwendigkeit, die Dünnsäure auf über 85% aufkonzentrieren zu müssen, und mit vermindertem Bedarf an hochkonzentrierter Frischsäure.

Es ist klar, dass die einzelnen Zahlenwerte je nach Provenienz der Rohmaterialien etwas verschieden sein müssen. Bei Verwendung südafrikanischer, kanadischer, norwegischer oder australischer Titanschlacke bzw. Ilmenit müssen die benötigten Mengen an die jeweilige Schlackenzusammensetzung unter Berücksichtigung des Erfindunggedankens angepasst werden.

**Patentansprüche**

1. Verfahren zur Herstellung von Titandioxid mittels Aufschluss von Titanschlacke enthaltendem Ausgangsmaterial mit Schwefelsäure, wobei die gemahlene Titanschlacke mit über 95%iger hochkonzentrierter Schwefelsäure gemischt wird, und anschliessend der Mischung warme, aus bei der Titandioxid-Herstellung anfallender Dünnsäure aufkonzentrierte und recyklierte Säure zugegeben, und aus dem Aufschlusskuchen ein zur Hydrolyse von Titanylsulfat geeignete Lösung hergestellt wird, wobei die recyklierte Säure aus der beim Abtrennen des Hydrolysats anfallenden Dünnschwefelsäure durch Konzentration auf einen Schwefelsäuregehalt von 76 bis 87% unter Abtrennung von Metallsalzen gewonnen wird, dadurch gekennzeichnet, dass gleichzeitig mit der Titanschlacke und parallel dazu, jedoch von der Titanschlacke getrennt, Ilmenit ebenfalls mit hochkonzentrierter Schwefelsäure und mit Zugabe aus der Dünnsäure aufkonzentrierter und recyklierter Schwefelsäure aufgeschlossen wird und die Lösungen der Aufschlusskuchen beider Aufschlüsse anschliessend gemischt und gemeinsam weiterverbreitet werden, wobei für den Ilmenit-Aufschluss überwiegend aus Dünnsäure aufkonzentrierte recyklierte Schwefelsäure mit einem Schwefelsäuregehalt von 76-87% und nur ein kleinerer Teil hochkonzentrierte Schwefelsäure und für den Titanschlacken-Aufschluss überwiegend hochkonzentrierte Schwefelsäure mit einer Konzentration über 95% und nur ein kleinerer Teil aus Dünnsäure aufkonzentrierte recyklierte Schwefelsäure verwendet wird.

2. Verfahren nach Anspruch 1, dadurch gekennzeichnet, dass das Mengenverhältnis von Titanschlacke und Ilmenit, sowie die Anteile von recyklierter und von hochkonzentrierter Schwefelsäure beim Titanschlacken- und beim Ilmenit-Aufschluss so gewählt werden, dass die Startbedingungen für die beiden Aufschlüsse bezüglich Temperatur und Schwefelsäurekonzentration, insbesondere 90% und 120°C, bzw. 85% und 92°C erreicht werden.

3. Verfahren nach Anspruch 1, dadurch gekennzeichnet, dass das Mengenverhältnis von Titanschlacke und Ilmenit, sowie die Anteile von recyklierter und von hochkonzentrierten Schwefelsäure beim Titanschlacken- und beim Ilmenit-Aufschluss so gewählt werden, dass die Startbedingungen für die beiden Aufschlüsse bezüglich Temperatur und Schwefelsäurekonzentration, insbesondere 90% und 120°C, bzw. 85% und 92°C, sowie durch zusätzliche Einleitung von Dampf erreicht werden.

4. Verfahren nach Anspruch 3, dadurch gekennzeichnet, dass zum Start der Aufschlussreaktionen Dampf mit einer Temperatur oberhalb der jeweiligen Starttemperaturen zugegeben wird.

5. Verfahren nach Anspruch 3 oder 4, dadurch gekennzeichnet, dass die Temperaturen der zugegebenen aus der Dünnsäure aufkonzentrierten Schwefelsäuren so gewählt werden, dass die Mischungen eine Temperatur etwas unterhalb der jeweiligen Starttemperatur der Aufschlussreaktion aufweisen.

6. Verfahren nach einem der Ansprüche 1 bis 5, dadurch gekennzeichnet, dass die hochkonzentrierte Schwefelsäure zumindest zum Teil aus den bei der Röstung die bei der Aufkonzentration anfallenden Metallsulfate gebildeten Schwefeloxide gewonnen wird.

7. Verfahren nach einem der Ansprüche 1 bis 6, dadurch gekennzeichnet, dass als hochkonzentrierte Schwefelsäure eine Säure mit azeotroper Konzentration zwischen 98 und 99%, insbesondere 98,5% verwendet wird.

**Claims**

1. A method for producing titanium dioxide by means of disintegration of starting material containing titanium slag with sulphuric acid, in which the ground titanium slag is mixed with over 95% highly-concentrated sulphuric acid, and then warm acid concentrated and recycled from dilute acid produced in the production of titanium dioxide is added to the mixture, and a solution suitable for the hydrolysis of titanyl sulphate is produced from the disintegration cake, the recycled acid being obtained from the dilute sulphuric acid produced upon separation of the hydrolysate by concentration to a sulphuric acid content of 76 to 87% with separation of metal salts,

characterised in that, simultaneously with the titanium slag and parallel thereto, but separately from the titanium slag, ilmenite is likewise disintegrated with highly-concentrated sulphuric acid and with an addition of sulphuric acid concentrated and recycled from the dilute acid, and the solutions of the disintegration cakes of both disintegration operations are then mixed and jointly processed further, with predominantly recycled sulphuric acid concentrated from dilute acid and having a sulphuric acid content of 76-87% and only a minor portion of highly-concentrated sulphuric acid being used for the ilmenite disintegration, and predominantly highly-concentrated sulphuric acid having a concentration of over 95% and only a minor portion of recycled sulphuric acid concentrated from dilute acid being used for the titanium slag disintegration.

2. A method according to Claim 1, characterised in that the quantitative ratio of titanium slag and ilmenite, and also the contents of recycled and of highly-concentrated sulphuric acid in the disintegration of titanium slag and of ilmenite are selected so that the starting conditions for the two disintegration operations in terms of temperature and sulphuric acid concentration, in particular 90% and 120°C and 85% and 92°C respectively, are achieved.

3. A method according to Claim 1, characterised in that the quantitative ratio of titanium slag and ilmenite, and also the proportions of recycled and of highly-concentrated sulphuric acid in the disintegration of titanium slag and of ilmenite are selected so that the starting conditions for the two disintegration operations in terms of temperature and sulphuric acid concentration, in particular 90% and 120°C and 85% and 92°C respectively, and also by additional introduction of steam, are achieved [sic].

4. A method according to Claim 3, characterised in that at the start of the disintegration reactions steam at a temperature above the respective starting temperature is added.

5. A method according to Claim 3 or 4, characterised in that the temperatures of the added sulphuric acids which are concentrated from the dilute acid are selected so that the mixtures have a temperature somewhat below the respective starting temperature of the disintegration reaction.

6. A method according to one of Claims 1 to 5, characterised in that the highly-concentrated sulphuric acid is recovered at least in part from the sulphur oxides formed upon the roasting [of] the metal sulphates produced upon concentration.

7. A method according to one of Claims 1 to 6, characterised in that an acid having an azeotropic concentration of between 98 and 99%, in particular 98.5%, is used as the highly-concentrated sulphuric acid.

## Revendications

1. Procédé de préparation de dioxyde de titane par décomposition, au moyen d'acide sulfurique, d'une matière première contenant du laitier de titane, dans lequel le laitier de titane broyé est mélangé à de l'acide sulfurique à haute concentration dépassant 95%, et dans lequel on ajoute ensuite au mélange de l'acide modérément chaud, provenant de l'acide dilué produit lors de la préparation du dioxyde de titane, cet acide dilué étant concentré et recyclé, et dans lequel on produit à partir du gâteau de décomposition une solution appropriée pour l'hydrolyse du sulfate de titanyle, tandis que l'acide recyclé à partir de l'acide dilué produit lors de la séparation de l'hydrolysat est obtenu par concentration jusqu'à une teneur en acide sulfurique de 76 à 87%, tout en séparant des sels métalliques,

caractérisé en ce qu'en même temps que le laitier de titane et parallèlement à celui-ci, mais séparément du laitier de titane, on décompose de l'ilménite, également avec de l'acide sulfurique à haute concentration et avec addition d'acide sulfurique recyclé provenant de l'acide dilué, après concentration, et les solutions des gâteaux de décomposition des deux décompositions étant ensuite mélangées et soumises ensemble à un traitement complémentaire, tandis qu'on utilise pour la décomposition de l'ilménite, en majeure partie de l'acide sulfurique recyclé ayant une teneur en acide sulfurique de 76 à 87%, obtenu par concentration d'acide dilué, et seulement une partie moindre d'acide sulfurique à haute concentration, tandis qu'on utilise pour la décomposition du laitier de titane, en majeure partie de l'acide sulfurique à haute concentration avec une concentration supérieure à 95%, et seulement une partie moindre d'acide sulfurique recyclé obtenu par la concentration d'acide dilué.

2. Procédé selon la revendication 1, caractérisé en ce que le rapport entre les antités de laitier de titane et d'ilménite, ainsi que les proportions d'acide sulfurique recyclé et d'acide sulfurique à haute concentration lors de la décomposition du laitier de titane et lors de la décomposition d'ilménite, sont choisis de telle sorte que soient obtenues les conditions initiales pour l'une et l'autre décompositions, en ce qui concerne la température et la concentration en acide sulfurique, en particulier 90% et 120°C, respectivement 85% et 92°C.

3. Procédé selon la revendication 1, caractérisé en ce que le rapport entre les quantités de laitier de titane et d'ilménite, ainsi que les proportions d'acide sulfurique recyclé et d'acide sulfurique à haute concentration, lors de la décomposition du laitier de titane et lors de la décomposition de l'ilménite, sont choisis de telle sorte que soient obtenues les conditions initiales pour l'une et l'autre décompositions, en ce qui concerne la température et la concentration en acide sulfurique, en particulier 90% et 120°C, respectivement 85% et 92°C, ainsi que par l'introduction supplémentaire de vapeur.

4. Procédé selon la revendication 3, caractérisé en ce qu'au début de la réaction de décomposition on ajoute de la vapeur ayant une température supérieure aux températures initiales respectives au début de la réaction.

5. Procédé selon la revendication 3 ou 4, caractérisé en ce que les températures des acides sulfuriques ajoutés, provenant de la concentration de l'acide dilué, sont choisies de telle sorte que les mélanges présentent une température légèrement inférieure à la température initiale respective au début de la réaction de décomposition.

6. Procédé selon une des revendications 1 à 5, caractérisé en ce que l'acide sulfurique à haute concentration provient, au moins en partie, des oxydes de soufre formés lors du grillage des sulfates métalliques produits lors de la concentration.

7. Procédé selon une des revendications 1 à 6, caractérisé en ce qu'on utilise, en tant qu'acide sulfurique à haute concentration, un acide ayant une concentration azéotrope entre 98 et 99%, en particulier de 98,5%.

Ilmenit (25%)

0,6138

0,1400 t $H_2SO_4$ / t $TiO_2$

0,4738 (85%)

0,1400 (98,5%)

85%
90°C

QIT (75%)

1,8414

1,2652 (98,5%)

0,3702 (98,5%)

F

0,8950 (98,5%)

0,5762 (85%)

1,0350 (98,5%)

90,5%
120°C

1,0500

0,4500

R

0,0189

0,0811

H

1,500 (23%)

MeO

0,3500(5%)

D

D'

EP 0 317 857 B1